# EUROPÄISCHE PATENTSCHRIFT

(11) **EP 1 023 417 B1**
(45) Veröffentlichungstag und Bekanntmachung des Hinweises auf die Patenterteilung: **15.01.2003**
(21) Anmeldenummer: 98954384.8
(22) Anmeldetag: 09.10.1998
(51) Int. Cl.: C09J 7/02, C09J 7/04, B65H 37/00, B42C 9/00

(54) **KLEBEBAND-PACKUNG ZUR WEITERVERARBEITUNG, BEISPIELSWEISE IN DER BUCH- BZW. BLOCKBINDETECHNIK**
ADHESIVE TAPE PACKAGE FOR SUBSEQUENT PROCESSING, FOR EXAMPLE IN BOOK OR PAD BINDING TECHNOLOGY
CONDITIONNEMENT PAR BANDE ADHESIVE POUR TRAITEMENT ULTERIEUR, PAR EXEMPLE DANS LA TECHNIQUE DE MISE EN TABLETTE OU DE RELIURE

(30) Priorität: 14.10.1997 DE 29718169 U
(43) Veröffentlichungstag der Anmeldung: 02.08.2000
(73) Patentinhaber: PLANATOL KLEBETECHNIK GmbH, 83101 Rohrdorf (DE)
(72) Erfinder: SCHÜTZ, Ernst, D-83253 Rimsting am Chiemsee (DE)
(74) Vertreter: Ernicke, Hans-Dieter, Dipl.-Ing.
(86) Internationale Anmeldenummer: EP9806416
(87) Internationale Veröffentlichungsnummer: WO99019413

(56) Entgegenhaltungen:
- WO-A-89/09129
- DE-U- 29 701 215
- FR-A- 1 268 972
- US-A- 1 967 444
- US-A- 4 372 472

## Beschreibung

Die Erfindung bezieht sich auf eine Klebeband-Packung, beispielsweise zur Weiterverarbeitung in der Buchbinde- bzw. Blockbindetechnik, bei der ein Trägerelement in Blatt- oder Bandform vornehmlich eine Schmelzkleber-Schicht aufweist.

Klebebänder dieser Art werden im allgemeinen in der Klebebindetechnik eingesetzt, um aus losen Blättern bestehende Blöcke im Rückenbereich klebezubinden und/oder mit einem Fälzel im Rückenbereich zu umgreifen. Das einzelne Klebeband wird auf das Format des Rückens zugeschnitten, in eine Klebebindeeinrichtung eingeführt und dort mit dem Blockrücken in Verbindung gebracht. Durch Erwärmung schmilzt die Schmelzkleber-Schicht und erlangt dadurch klebende Wirkung. Solche Klebebänder werden in der Regel in Form von Rollen oder fertigen Zuschnitten geliefert.

Probleme bereitet die Lagerung und Präsentation solcher Klebebänder. Klebebänder in Rollenform bedingen ein Querschneiden, um den geeigneten Zuschnitt zu erlangen. Eine solche Verarbeitung setzt mehrere Arbeitsschritte voraus und ist nur dann rentabel, wenn hohe Auflagen bearbeitet werden müssen.

Es ist ferner bekannt, beschichtete Bänder als Zuschnitte zu stapeln, beispielweise in Kassetten, was die Möglichkeit bringt, jeweils den untersten oder obersten Zuschnitt zu entnehmen. In der Praxis hat sich aber erwiesen, daß solche Zuschnittstapel der Verwerfung der Zuschnitte unterliegen und damit die Entnahme und Verarbeitung der einzelnen Zuschnitte nicht störungsfrei möglich ist.

Der Erfindung liegt daher die Aufgabe zugrunde, beschichtete Klebebänder so zu präsentieren und zu lagern, daß ihre Entnahme für den einzelnen Arbeitsvorgang problemlos und ohne Störung erfolgen kann.

Die Lösung der gestellten Aufgabe besteht erfindungsgemäß darin, daß die Klebeband-Packung voneinander getrennte Bandabschnitte aufweist, deren aneinandergrenzenden Ränder durch Einschnitte gebildet sind, welche mindestens das Trägerelement, nicht aber die Kleber-Schicht durchtrennen.

Die Folge dieser Maßnahme ist, daß die Bandabschnitte durch die nicht oder nicht ganz durchtrennte Kleber-Schicht aneinander gehalten sind und voneinander leicht abgetrennt werden können. Die Kohäsion der Kleber-Schicht soll so groß sein, daß sie den Zusammenhalt der Bandabschnitte in der Klebeband-Packung ohne weiteres sichert, aber das Abtrennen des einzelnen Bandabschnittes durch Abreißen oder Abdrücken ohne weiteres zuläßt.

Für diesen Zweck eignen sich erfindungsgemäß Schmelzkleber-Streifen, deren Schmelzkleberschicht leicht eingeschnitten werden kann.

Im Sinne der Erfindung kann der Einschnitt auch mehr oder weniger tief in die Schmelzkleber- Schicht eindringen. Wesentlich ist, daß der verbleibende Bereich der Schmelzkleber- Schicht den Zusammenhalt der Klebeband-Packung gewährleistet.

Klebebänder mit Sollrißstellen sind an sich bekannt. Bei der WO 89/09129 und der US-A-1967444 werden die bandförmigen Trägerelemente mit einem Haftkleber beschichtet, der mit einer Schutzfolie abgedeckt werden muß, um keine unerwünschte Klebung zu erzielen. Die Sollrißlinien dringen nur zum Teil in das Trägerelement, ohne dieses zu durchtrennen, wie dies die Erfindung vorschreibt. Bei der Erfindung übernimmt die Schmelzkleberschicht die tragende Funktion, woraus im besonderen folgt, daß bei der Erfindung ein anderes und neues Herstellungsverfahren für die Klebebänder zur Anwendung kommt, indem der Schmelzkleber auf das Trägerelement aufgetragen und ausgehärtet werden muß, bevor das Trägerelement stellenweise durchtrennt wird. Beim Stand der Technik werden hingegen die Sollrißlinien in das Trägerelement eingeschnitten, bevor der Klebstoff auf das Trägerelement aufgetragen wird.

In einem bevorzugten Ausführungsbeispiel sind die Bandabschnitte Stoß an Stoß als Rolle aufgespult, wobei die Einschnitte quer zur Längserstreckung der Bandabschnitte verlaufen. Eine solche Rolle kann in einer mit einem Ausgabeschlitz versehenen Kassette gelagert sein, wodurch Verpackung und Präsentation zum Zwecke der Verarbeitung der Bandabschnitte durch ein und denselben Gegenstand gegeben sind. Derartige Kassetten sind an sich z.B. durch die US-A-4372472 bekannt.

Die Erfindung sieht aber auch vor, daß zwei oder mehr Bandabschnitte nebeneinander und gegebenenfalls auch hintereinander als Zuschnitt zusammengefaßt und durch längs und gegebenenfalls querverlaufende Einschnitte voneinander getrennt sind. In diesem Fall werden die Zuschnitte, welche mehrere Bandabschnitte umfassen, in Stapelform geliefert und präsentiert.

Im Stapel können die Zuschnitte in Form von Einzelblättern oder als klebegebundener Block zusammengefaßt werden. Auch die Bildung von Stapeln mit einer Zickzack-Faltung der miteinander verbundenen Zuschnitte ist im Rahmen der Erfindung beispielsweise vorgesehen.

Schließlich kann die Klebeband-Packung mehr als zwei Lagen aufweisen, wobei die Klebeschicht jeweils zwischen zwei Trägerelementen sich befindet, die bis auf die Klebeschicht durchtrennt sind.

Der Gegenstand der Erfindung umfaßt auch eine Vorrichtung zur Herstellung von Klebeband-Packungen der erfindungsgemäßen Art. Danach ist in einer Längs- und/oder Querschneidemaschine für einseitig mit Schmelzkleber beschichtete Trägerelemente die Schnittiefe des Messers so eingestellt, daß es das Trägerelement, nicht aber die Schmelzkleber-Schicht durchtrennt. Hierbei erweist es sich als zweckmäßig, wenn die Schneidemaschine vor dem Messer eine Klebeband-Abspulrolle und hinter dem Messer eine Aufspulrolle für das mit Quer-Einschnitten versehene Klebeband aufweist.

Wie bereits eingangs erwähnt, kann die Schnittiefe des Messers auch so eingestellt werden, daß der Einschnitt auch noch etwas in die Schmelzkleber- Schicht ragt. Die verbleibende Restdicke des Schmelzklebers sollte aber noch so stabil sein, daß sie den Zusammenhalt der Klebeband-Packung sicherstellt.

Eine andere und für sich selbständig erfinderische Lösung der gestellten Aufgabe besteht darin, daß auf einer Spule das Ende mindestens eines faden- oder bandförmigen Führungsstranges fixiert und der Speicher durch Aufspulen dieses Führungsstranges gemeinsam mit einer Vielzahl von aufeinanderfolgenden Zuschnitten der beschichteten Bänder gebildet ist, derart, daß zwischen jeder Bandlage des so gebildeten Bänderwickels der faden- oder bandförmige Führungsstrang zu liegen kommt.

Dieser erfindungsgemäße Führungsstrang trennt die einzelnen Lagen im Bänderwickel sicher voneinander, wenn durch Abspulen des Speichers die beschichteten Bänderzuschnitte entnommen werden. Selbst dann, wenn die Klebeschicht der einzelnen Zuschnitte Klebewirkung entfaltet, stört diese Klebeschicht bei der Entnahme der Zuschnitte keineswegs, weil der zwischen den einzelnen Bandlagen befindliche Führungsstrang sicher das Trennen der einzelnen Bandlage von der nachfolgenden ermöglicht.

Zugleich bildet der erfindungsgemäße Führungsstrang die Möglichkeit, das Abziehen der einzelnen Bandzuschnitte vom Bänderwickel zu erleichtern.

Der erfindungsgemäße Führungsstrang kann ein Faden sein, der etwa mittig zum aufgespulten Band zu liegen kommt. Ebenso ist es möglich, zwei oder mehrere voneinander distanzierte Fäden mit ihren Enden an einer Spule zu fixieren und diese distanziert voneinander zusammen mit den Bänderzuschnitten aufzuspulen. Schließlich ist es Führungsstrang einzusetzen, der also gegenüber einem Faden eine wesentlich größere Breite besitzt. Entscheidend ist, daß der Führungsstrang aus einem Material besteht, das sich leicht von einer klebenden Schicht lösen kann.

Es ist aber auch denkbar, die Zuschnitte untereinander durch jeweils ihre aneinandergrenzenden Ränder teilweise überdeckende Klebeelemente, z.B. Tapes, zu verbinden.

In den weiteren Unteransprüchen sind einige Ausführungsvarianten der Erfindung gezeigt. So kann beispielsweise die Aufspulung der Zuschnitte auf die Spule bzw. den Bänderwickel Stoß an Stoß erfolgen, was aber nicht ausschließt, daß die Zuschnitte auch sich einander überlappend aufgespult werden können. Selbst eine Aufspulung der Zuschnitte mit dazwischen befindlichen Lücken schließt die Erfindung nicht aus.

Es hat sich in der Praxis bewährt, daß die Klebeschicht der aufgespulten Zuschnitte auf ihrer im aufgespulten Zustand nach außen gerichteten Seite sich befinden sollte. Diese Maßnahme erleichtert es, den abgezogenen Zuschnitt von unten her gegen den Rücken eines Blattstapels heranzuführen, um dort die geplante Klebebindung herbeizuführen.

Im allgemeinen besteht der erfindungsgemäße Speicher aus der erwähnten Spule, die zunächst einseitig mit einer Scheibe versehen ist, um eine Begrenzung des aufzuspulenden Bänderwickels herbeizuführen. Damit das Ende des Führungsstranges leicht mit der Spule verbunden werden kann, empfiehlt es sich, eine zweite Scheibe erst dann auf die Spule zu setzen, wenn das Ende des Führungsstranges fixiert ist.

Ein im Sinne der Erfindung gebildeter Speicher kann erfindungsgemäß in einem Gehäuse drehbar gelagert sein, Ein im Sinne der Erfindung gebildeter Speicher kann erfindungsgemäß in einem Gehäuse drehbar gelagert sein, das eine Wandöffnung zum Hindurchführen der Bänder und des Führungsstranges aufweist. Diese Maßnahme schließt natürlich ein, daß derartige Speicher leicht gegeneinander austauschbar sein müssen, um eine Klebebinde-Technik für höhere Stückzahlen zu ermöglichen.

Aus dem gleichen Grunde empfiehlt es sich, im oder neben dem Gehäuse eine insbesondere gegenläufig zur Bandentnahmerichtung antreibbare Achse zum Aufspulen des abgezogenen Führungsstranges zu lagern. Durch motorischen Antrieb dieser Achse ist es möglich, jeweils den benötigten Zuschnitt aus dem Speicher abzuziehen.

Die Erfindung ist ferner durch die Eingliederung des Speichers in ein Klebebindegerät gekennzeichnet.

Die Erfindung ist in den Zeichnungen schematisch und beispielsweise dargestellt. Es zeigen:
- Figur 1:: einen Längsschnitt durch ein Klebeband mit einer Schmelzkleber-Schicht,
- Figur 2:: einen Längsschnitt durch das Klebeband gemäß Figur 1 mit quer zur Bandrichtung verlaufenden Einschnitten,
- Figur 3:: einen Querschnitt durch eine Kassette mit einer darin gelagerten Klebeband-Rolle,
- Figur 4:: eine Draufsicht auf einen Zuschnitt als Klebeband-Packung für mehrere Bandabschnitte
- Figuren 5 bis 8:: schematische Draufsichten auf eine Spule zum Aufwickeln eines Führungsstranges und mehrerer Bandzuschnitte in verschiedenen Positionen,
- Figur 9:: eine Draufsicht auf zwei Bandzuschnitte mit einer Stoß-an-Stoß-Anordnung,
- Figur 10:: eine Draufsicht auf zwei Bandzuschnitte mit einer sich überlappenden Anordnung der Enden,
- Figur 11:: eine Draufsicht auf einen Speicher mit einem fertigen Bänderwickel und
- Figur 12:: eine schematische Seitenansicht eines Gehäuses zur Aufnahme eines erfindungsgemäßen Speichers.

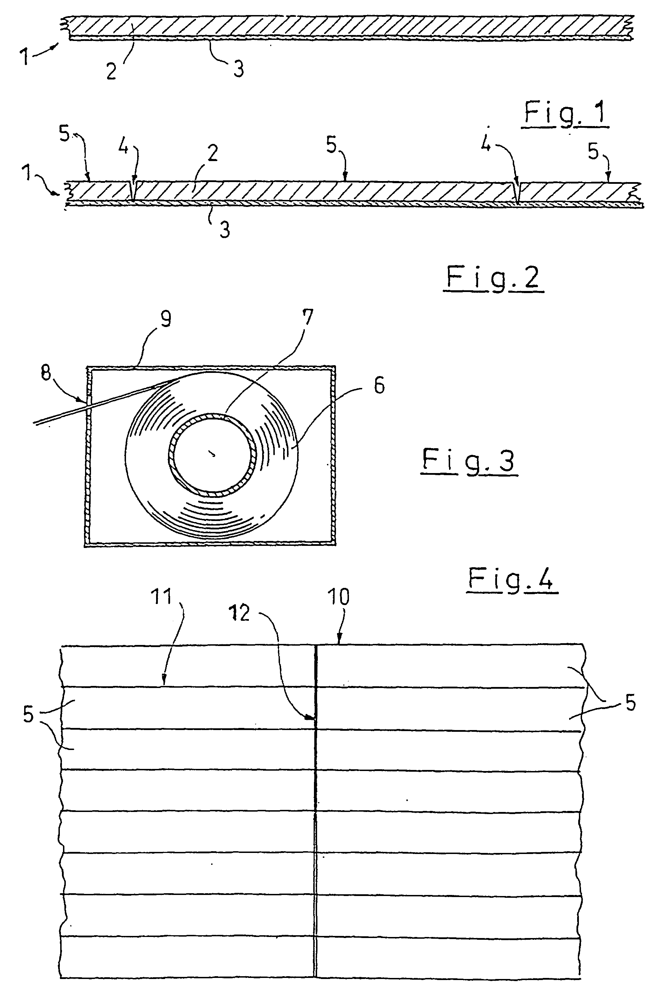

Im Querschnitt der Figur 1 ist ein Klebeband im Teillängsschnitt in stark vergrößerter Darstellung gezeigt. Das Klebeband (1) weist ein Trägerelement (2) aus Papier, Leinen oder dergleichen auf und ist einseitig mit einer Schmelzkleber-Schicht (3) versehen. Im kalten Zustand ist die Schmelzkleber-Schicht (3) klebeunwirksam. Die Klebefähigkeit entsteht erst durch Erwärmung der Schmelzkleber-Schicht (3). In der Natur beträgt die Dicke des Trägerelementes (2) ca. 300 µ wohingegen der Klebstoffauftrag eine Dicke von ungefähr 185 bis 195 µ aufweist.

Wenn man nun das Klebeband (1) im Sinne der Darstellung gemäß Figur 2 mit Einschnitten (4) versieht, welche das Trägerelement (2) durchtrennen, nicht aber die Schmelzkleber-Schicht (3), dann entsteht eine Abfolge von aneinandergrenzenden Bandabschnitten (5), die durch Abreißen oder Abdrücken längs einer zum Einschnitt (4) deckungsgleichen Linie ohne weiteres voneinander abgetrennt werden können. Die Kohäsion der Schmelzkleber-Schicht (3) ist so groß, daß sie trotz der Einschnitte (4) einen festen Zusammenhalt der Bandabschnitte (5) gewährleistet. Allerdings setzt die Schmelzkleber-Schicht (3) dem Abreißen oder Abdrücken des Einzelbandes (5) keinen größeren Widerstand entgegen. Wenn die Beschaffenheit der Schmelzkleber-Schicht (3) dies zuläßt, kann der Einschnitt (4) auch in die Schmelzkleber-Schicht (3) eindringen, ohne sie allerdings zu durchdringen. Wesentlich ist, daß der verbleibende Rest der Schmelzkleber-Schicht (3) genügend stabil ist, um die Klebeband-Packung (1) zusammenzuhalten.

Das Trägerelement (2) kann auch beidseits der Schmelzkleber-Schicht (3) angeordnet sein. Ebenso können mehrere Lagen aus Trägerelementen (2) und Schmelzkleber-Schichten (3) gebildet werden.

Die Figur 3 zeigt eine Präsentation des Klebebandes (1) in Form einer Rolle (6), die auf eine Hülse (7) aufgespult und in einer Kassette (9) gelagert ist. Die Kassette (9) weist einen Ausgabeschlitz (8) auf, durch den das Klebeband (1,5) abgezogen werden kann. Diese Kassette (9) kann zugleich Verpackungselement und Präsentationsorgan an der Klebebindeeinrichtung sein.

Die Herstellung einer solchen Anordnung ist verhältnismäßig einfach. Man geht von einer Klebebandrolle (1) oder mehreren nebeneinander angeordneten Klebebandrollen (1) aus, von welcher das Klebeband (1) in eine Querschneidevorrichtung geführt wird, die mittels eines höhenverstellbaren Messers gegen einen Gegenzylinder oder eine unterliegende Leiste, beispielsweise Silikonleiste, Querschnitte anbringt. Das Messer ist so eingestellt, daß es mindestens das Trägerelement (2), nicht aber die Schmelzkleber-Schicht (3) ganz durchtrennt. Ein solches mit quer sich erstreckenden Einschnitten (4) versehenes Klebeband (1) wird dann wieder aufgerollt und beispielsweise in Form der Präsentation gemäß Figur 3 versandt.

Man kann das fertige Klebeband (1) aber auch in Form eines Leporello-Stapels falten, wobei der vom Einschnitt (4) nicht erfaßte Bereich der Schmelzklebe-Schicht den Falz jeweils bildet.

Die Figur 4 zeigt eine Ausführungsvariante, wonach die Bandabschnitte (5) in einem Zuschnitt (10) zusammengefaßt sind und durch Längseinschnitte (11) und Quereinschnitte (12) voneinander distanziert sind. Auch diese Einschnitte (11,12) sind lediglich so tief, daß sie mindestens das Trägerelementmaterial (2) durchtrennen, nicht aber die Schmelzkleber-Schicht (3). Eine Vielzahl solcher Zuschnitte (10) läßt sich in Stapelform verpacken und versenden. Es bleibt dem Fachmann überlassen, ob der Zuschnitt (10) nur Längseinschnitte (11) oder Quereinschnitte (12) oder beides enthält.

Zum Gegenstand der Figuren 2 und 3 umfaßt die Erfindung auch ein Verfahren und eine Vorrichtung zur Herstellung von Klebebändern mit Quereinschnitten in Rollenform. Das Verfahren besteht darin, in das Trägerelement des Klebebandes Quereinschnitte einzubringen, welche das Trägerelement (2) durchtrennen, nicht aber die Schmelzkleber-Schicht. Nach dem Anbringen der Einschnitte wird das Klebeband wieder aufgespult und gegebenenfalls in einer Kassette präsentiert.

Eine zur Durchführung dieses Verfahrens geeignete Vorrichtung besteht aus einer Schneidemaschine, deren Schneidmesser höheinstellbar ist und so eingestellt wird, daß es lediglich das Trägerelement (2) durchtrennt, nicht aber die Schmelzkleber-Schicht (3). Zweckmäßigerweise sind vor und hinter dem Schneidmesser Spulen vorgesehen, von denen das Klebeband gemäß einer Ausführung nach Figur 1 abgezogen und nach Anbringen der Einschnitte wieder aufgespult wird.

Denkbar ist aber auch die Integration der Schneidemaschine in eine Beschichtungsanlage vor dem Aufwickelvorgang der Rolle bzw. Rollen. Ebenso bietet sich die Möglichkeit an, die Querschneidevorrichtung in einen Rollenschneider für Längsschnitt zu integrieren, um Einzelrollen aus breiter Bahn zu schneiden und gleichzeitig mit Querschnitten zu versehen.

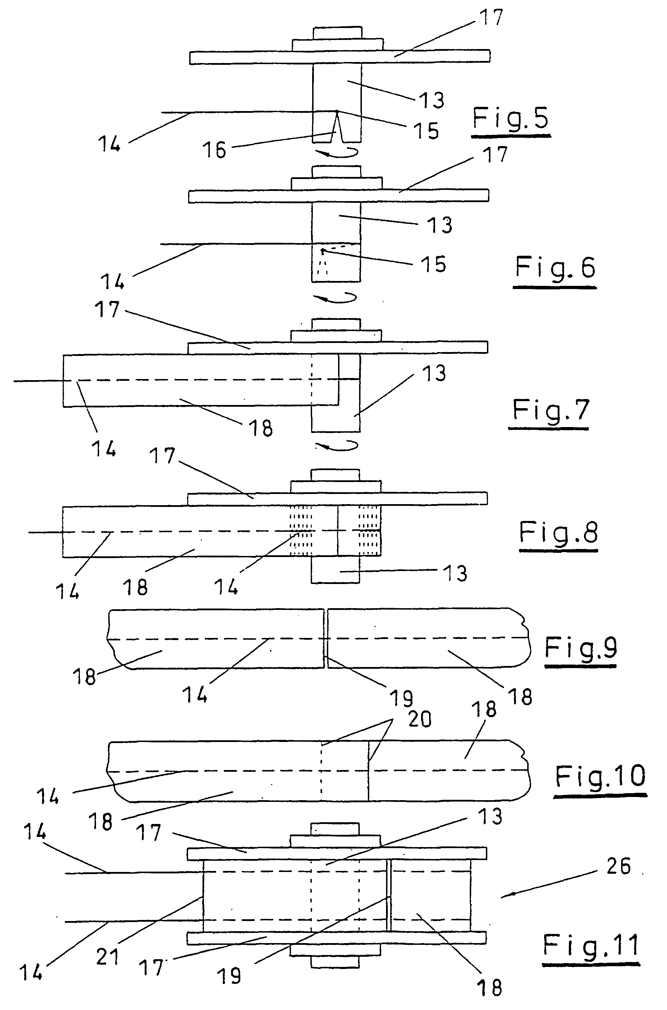

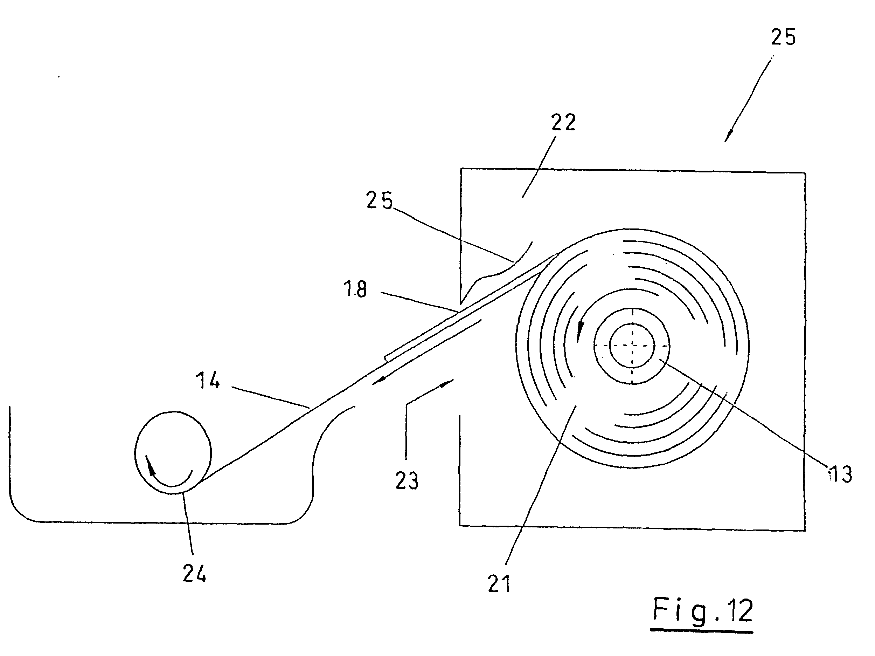

In den Figuren 5 bis 12 ist eine andere Lösungsmöglichkeit für die gestellte Aufgabe gezeigt, die von selbständiger erfinderischer Bedeutung ist.

In Figur 5 ist zunächst gezeigt, daß das Ende (15) eines fadenförmigen Führungsstranges (14) an einer Spule (13) bei (16) fixiert wird. Die Spule (13) ist einseitig von einer Scheibe (17) begrenzt. Zur Fixierung des Strangendes (15) kann beispielsweise ein Schlitz in der Spule (13) verwendet werden. Diese Maßnahme soll jedenfalls ermöglichen, beim Verdrehen der Spule (13) um ihre Achse den Führungsstrang (14) aufzuspulen, wie dies in Figur 6 dargestellt ist.

Gemäß den Figuren 7 und 8 werden nunmehr Zuschnitte (18) von beschichteten Bändern gemeinsam mit dem Führungsstrang (14) auf die Spule (13) aufgewickelt. Bei fortschreitender Aufwicklung entsteht ein Bild gemäß Figur 8, wonach zwischen jeder Lage der aufgewickelten Bandzuschnitte (18) sich der Führungsstrang (14) befindet.

Das Aufwickeln der beschichteten Bandzuschnitte (18) kann gemäß Beispiel der Figur 9 durch Stoß-an-Stoß-Anordnung (19) oder gemäß Figur 10 durch Überlappung (20) der Bandenden erfolgen. Es ist auch nicht schädlich, wenn zwischen den Bandenden eine Lücke sich befindet.

Es ist aber auch möglich, benachbarte Bandzuschnitte (18) miteinander durch Klebeelemente zu verbinden, beispielsweise Tapes, die ihre benachbarten Ränder teilweise überdecken.

Damit die Bandzuschnitte (18) beim Aufspulen auf die Spule (13) ordentliche Seitenführung haben, empfiehlt es sich, auf die Spule (13) eine zweite Scheibe (17) gemäß dem Beispiel der Figur 10 aufzusetzen. Diese Figur 10 zeigt einen fertigen Speicher (26), bei dem auf einer Spule (13) eine Vielzahl von beschichteten Bandzuschnitten (18) aufgewickelt sind. Es ist in Figur 4 in Alternative zu Figur 5 ferner gezeigt, daß auch zwei voneinander distanzierte Führungsstränge (14) aufgewickelt werden können. Anstelle dieser Führungsstränge (14) in Fadenform kann auch ein bandförmiger Führungsstrang aufgespult werden. Am Ende des Spulvorganges ragt der Führungsstrang (14) nach außen vor, um eine Handhabe zum Abspulen des Bänderwickels (21) zu gewähren.

Ein Speicher (26) entsprechend Figur 10 läßt sich im Sinne des Ausführungsbeispiels der Figur 11 in einem Gehäuse (22) lagern, der eine Wandöffnung (23) besitzt, durch den der Verbund von Führungsstrang (14) und Bandzuschnitt (18) abgezogen werden kann. Hierbei empfiehlt es sich, daß die klebende Schicht des Bandzuschnittes im Bänderwickel (21) nach außen zu liegen kommt. Darunter befindet sich jeweils der Führungsstrang (14), der die darunter liegende Lage der Bandzuschnitte von außen her abdeckt. Man kann also ohne weiteres durch Ziehen am Führungsstrang (14) eine Abspulung der Bandzuschnitte (18) vom Bänderwickel (21) herbeiführen.

Im Gehäuse (22) befindet sich ein Abweiser (25), der verhindert, daß die einzelnen Lagen des Bänderwickels sich aus ihrer Eigenspannung heraus ausdehnen können.

Im Bereich des Gehäuses (22) oder in einem benachbarten Gehäuse befindet sich eine Achse (24), die dazu bestimmt ist, den Führungsstrang (14) aufzuwickeln, während die beschichteten Bandzuschnitte (18) abgezogen werden. Es hat sich als praktisch erwiesen, die Drehrichtung der Achse (24) umgekehrt zur Abzugs-Drehrichtung des Bänderwickels (21) festzulegen.

Es liegt auf der Hand, daß die im Gehäuse (22) gelagerten Speicher (26) austauschbar sein müssen, um eine zügige Entnahme der aufgewickelten Bandzuschnitte zu erreichen.

### BEZUGSZEICHENLISTE

- 1: Klebeband
- 2: Trägerelement
- 3: Schmelzkleber-Schicht
- 4: Einschnitt
- 5: Bandabschnitt
- 6: Rolle
- 7: Hülse
- 8: Ausgabschlitz
- 9: Kassette
- 10: Zuschnitt
- 11: Längseinschnitt
- 12: Quereinschnitt
- 13: Spule
- 14: Führungsstrang
- 15: Ende des Führungsstranges
- 16: Fixierung
- 17: Scheibe
- 18: beschichteter Bandzuschnitt
- 19: Stoß
- 20: Überlappung
- 21: Bänderwickel
- 22: Gehäuse
- 23: Wandöffnung
- 24: Achse
- 25: Abweiser
- 26: Speicher

## Patentansprüche

1. Klebeband-Packung, beispielsweise zur Weiterverarbeitung in der Buch- bzw. Blockbindetechnik, bei der ein Trägerelement (2) in Blatt-oder Bandform eine Schmelzkleber-Schicht (3) aufweist, **dadurch gekennzeichnet, daß** die Klebeband-Packung (1) voneinander getrennte Bandabschnitte (5) aufweist, deren aneinandergrenzenden Ränder durch Einschnitte (4) gebildet sind, welche mindestens das Trägerelement (2), nicht aber die Kleber-Schicht (3) durchtrennen.

2. Verfahren zur Herstellung der Klebeband-Packung nach Anspruch 1, **dadurch gekennzeichnet, daß** zunächst das Trägerelement mit dem Schmelzkleber beschichtet und dann das Trägerelement bis auf die erkaltete Schmelzkieberschicht durchtrennt wird.

3. Klebeband-Packung nach Anspruch 1, **dadurch gekennzeichnet, daß** die Bandabschnitte (5) Stoß an Stoß als Rolle (6) aufgespult sind und die Einschnitte (4) quer zur Längserstreckung der Bandabschnitte (5) verlaufen.

4. Klebeband-Packung nach Anspruch 3, **dadurch gekennzeichnet, daß** die Rolle (6) in einer mit einem Ausgabeschlitz (8) versehenen Kassette (9) gelagert ist.

5. Klebeband-Packung nach Anspruch 1, dadurch g e kennzeichnet, daß mehrere Bandabschnitte (5) nebeneinander und gegebenenfalls auch hintereinander als Zuschnitt zusammengefaßt und durch längs und gegebenenfalls quer verlaufende Einschnitte voneinander getrennt sind.

6. Klebeband-Packung nach einem der Ansprüche 1 oder 5, **dadurch gekennzeichnet, daß** die Bandabschnitte (5) in Form eines Leporello-Stapels zusammengefaßt sind.

7. Klebeband-Packung nach einem der Ansprüche 1 bis 5, **dadurch gekennzeichnet, daß** die Klebeband-Packung mehr als zwei Lagen aufweist, von denen die Klebeschichten beidseits des jeweiligen Trägerelementes (2) sich befinden und das einzelne Trägerelement (2) die Einschnitte (4) aufweist.

8. Vorrichtung zur Herstellung von Klebeband-Packungen nach einem der Ansprüche 1 bis 7, **dadurch gekennzeichnet, daß** in einer Längs- und/oder Querschneidemaschine für einseitig mit Schmelzkleber beschichtete Trägerelemente die Schnitt-Tiefe des Messers so eingestellt ist, daß es mindestens das Trägerelement, nicht aber die Schmelzkleber-Schicht durchtrennt.

9. Vorrichtung nach Anspruch 8, **dadurch gekennzeichnet, daß** die Schneidemaschine vor dem Messer eine Klebeband-Abspulrolle und hinter dem Messer eine Aufspulrolle für das mit Quer-Einschnitten versehene Klebeband aufweist.

10. Vorrichtung nach Anspruch 8, **dadurch gekennzeichnet, daß** die Schneidemaschine in eine Beschichtungsanlage oder in einen Rollenschneider für Längsschnitt vor der Aufwickelrolle integriert ist.

11. Speicher für beschichtete Klebebänder, nach Anspruch 1 oder einem der folgenden, **dadurch gekennzeichnet, daß** auf einer Spule (13) das Ende (15) mindestens eines faden- oder bandförmigen Führungsstranges (14) fixiert und der Speicher (26) durch Aufspulen dieses Führungsstranges (14) gemeinsam mit einer Vielzahl von aufeinanderfolgenden Zuschnitten (18) der beschichteten Bänder gebildet ist, derart, daß zwischen jeder Bandlage des so gebildeten Bänderwickels (21) der faden- oder bandförmige Führungsstrang (14) zu liegen kommt.

12. Speicher nach Anspruch 11, **dadurch gekennzeichnet, daß** die Zuschnitte (12) Stoß an Stoß (19) aufgespult sind.

13. Speicher nach Anspruch 11, **dadurch gekennzeichnet, daß** die Zuschnitte (18) sich einander überlappend (20) aufgespult sind.

14. Speicher nach Anspruch 11 oder einem der folgenden, **dadurch gekennzeichnet, daß** die Klebeschicht der Zuschnitte (12) auf ihrer im aufgespulten Zustand nach außen gerichteten Seite sich befindet.

15. Speicher nach Anspruch 11 oder einem der folgenden, **dadurch gekennzeichnet, daß** die Zuschnitte (18) untereinander durch jeweils ihre aneinandergrenzenden Ränder teilweise überdeckende Klebeelemente verbunden sind.

16. Speicher nach Anspruch 11 oder einem der folgenden, **dadurch gekennzeichnet, daß** auf der Spule (13) Scheiben (17) zur beidseitigen Begrenzung des Bänderwickels (21) geführt sind.

17. Speicher nach Anspruch 11 oder einem der folgenden, **dadurch gekennzeichnet, daß** der Speicher (26) in einem Gehäuse (22) drehbar gelagert ist, das eine Wandöffnung (23) zum Hindurchführen der Bänder (18) und des Führungsstranges (14) aufweist.

18. Speicher nach Anspruch 17 **dadurch gekennzeichnet, daß** im oder neben dem Gehäuse (22) eine insbesondere gegenläufig zur Bandentnahmerichtung antreibbare Achse (24) zum Aufspulen des abgezogenen Führungsstranges (14) gelagert ist.

19. Speicher nach Anspruch 17 oder einem der folgenden, **gekennzeichnet durch** seine Eingliederung in ein Klebebindegerät.

## Claims

1. Adhesive-tape pack, for example for further processing in book or block binding, in the case of which a carrier element (2) in sheet or band form has a layer (3) of hot-melt adhesive, **characterized in that** the adhesive-tape pack (1) has separate tape sections (5), of which the adjacent borders are formed by incisions (4) which cut through at least the carrier element (2), but not the adhesive layer (3).

2. Process for producing the adhesive-tape pack according to Claim 1, **characterized in that** first of all the carrier element is coated with the hot-melt adhesive and then the carrier element is cut as far as the cooled layer of hot-melt adhesive.

3. Adhesive-tape pack according to Claim 1, **characterized in that** the tape sections (5) are wound up in abutment as a roll (6) and the incisions (4) run transversely to the longitudinal extent of the tape sections (5).

4. Adhesive-tape pack according to Claim 3, **characterized in that** the roll (6) is mounted in a cassette (9) provided with a dispensing slot (8).

5. Adhesive-tape pack according to Claim 1, **characterized in that** a plurality of tape sections (5) are combined one beside the other, and possibly also one behind the other, as a blank, and are separated from one another by longitudinally and possibly transversely running incisions.

6. Adhesive-tape pack according to either of Claims 1 or 5, **characterized in that** the tape sections (5) are combined in the form of a fan-fold stack.

7. Adhesive-tape pack according to one of Claims 1 to 5, **characterized in that** the adhesive-tape pack has more than two layers, of which the adhesive layers are located on both sides of the respective carrier element (2) and the single carrier element (2) has the incisions (4).

8. Apparatus for producing adhesive-tape packs according to one of Claims 1 to 7, **characterized in that**, in a longitudinal-cutting and/or cross-cutting machine for carrier elements coated with hot-melt adhesive on one side, the cutting depth of the blade is set such that it cuts through at least the carrier element, but not the layer of hot-melt adhesive.

9. Apparatus according to Claim 8, **characterized in that** the cutting machine has an adhesive-tape-unwinding reel upstream of the blade and, downstream of the blade, a wind-up reel for the adhesive tape provided with crosswise incisions.

10. Apparatus according to Claim 8, **characterized in that** the cutting machine is integrated in a coating installation or in a reel cutter for longitudinal cutting upstream of the wind-up reel.

11. Store for coated adhesive tapes according to Claim 1 or one of the following claims, **characterized in that** the end (15) of at least one thread-like or strip-like guide strand (14) is fixed on a reel (13), and the store (26) is formed by virtue of this guide strand (14) being wound up together with a multiplicity of successive blanks (18) of the coated tapes, such that the thread-like or strip-like guide strand (14) ends up located between each layer of the resulting tape roll (21).

12. Store according to Claim 11, **characterized in that** the blanks (12) are wound up with their joints (19) in abutment.

13. Store according to Claim 11, **characterized in that** the blanks (18) are wound up with overlapping (20).

14. Store according to Claim 11 or one of the following claims, **characterized in that** the adhesive layer of the blanks (12) is located on that side of the latter which is directed outwards when in the wound-up state.

15. Store according to Claim 11 or one of the following claims, **characterized in that** the blanks (18) are connected to one another by adhesive elements which partially overlap their adjacent borders in each case.

16. Store according to Claim 11 or one of the following claims, **characterized in that** discs (17) are guided on the reel (13) in order to bound the tape roll (21) on both sides.

17. Store according to Claim 11 or one of the following claims, **characterized in that** the store (26) is mounted in a rotatable manner in a housing (22), which has a wall opening (23) for the through-passage of the tapes (18) and of the guide strand (14).

18. Store according to Claim 17, **characterized in that** mounted in or alongside the housing (22) is a spindle (24) which can be driven, in particular, counter to the tape-removal direction and is intended for winding up the drawn-off guide strand (14).

19. Store according to Claim 17 or one of the following claims, **characterized by** it being incorporated in an adhesive-binding unit.

## Revendications

1. Conditionnement par bande adhésive, par exemple pour le traitement ultérieur dans la technique de mise en tablette et de reliure, dans lequel un élément (2) support sous forme de feuille ou de bande a une couche (3) de colle fusible, **caractérisé en ce que** le conditionnement (1) par bande adhésive a des tronçons (5) de bandes séparés les uns des autres, dont les bords adjacents sont formés par des entailles (4) qui séparent au moins l'élément support (2), mais pas la couche (3) de colle.

2. Procédé de fabrication du conditionnement par bande adhésive suivant la revendication 1, **caractérisé en ce que** l'on revêt d'abord l'élément support de la colle fusible et on sépare ensuite l'élément support, à l'exception de la couche de colle fusible refroidie.

3. Conditionnement par bande adhésive suivant la revendication 1, **caractérisé en ce que** les tronçons (5) de bande sont enroulés bout à bout sous la forme d'une bobine (6), et les entailles (4) s'étendent transversalement à la direction longitudinale des tronçons (5) de bande.

4. Conditionnement par bande adhésive suivant la revendication 3, **caractérisé en ce que** la bobine est emmagasinée dans une cassette (9) munie d'une fente (8) de sortie.

5. Conditionnement par bande adhésive suivant la revendication 1, **caractérisé en ce que** plusieurs tronçons (5) de bande sont rassemblés côte à côte et, le cas échéant, aussi les uns derrière les autres sous la forme de pièces découpées et sont séparés les uns des autres par des entailles s'étendant longitudinalement et, le cas échéant, transversalement.

6. Conditionnement par bande adhésive suivant l'une des revendications 1 ou 5, **caractérisé en ce que** les tronçons (5) de bande sont rassemblés sous la forme d'une pile en accordéon.

7. Conditionnement par bande adhésive suivant l'une des revendications 1 à 5, **caractérisé en ce que** le conditionnement par bande adhésive a plus de deux strates, parmi lesquels les couches de colle se trouvent de part et d'autre de l'élément (2) support respectif, et l'élément (2) support a les entailles (4).

8. Installation de fabrication de conditionnement par bande adhésive suivant l'une des revendications 1 à 7, **caractérisée en ce que** dans une machine de coupe longitudinale et/ou transversale pour des éléments supports revêtus de colle fusible d'un côté, la profondeur de coupe du couteau est réglée de façon à ce qu'il sépare au moins l'élément support, mais pas la couche de colle fusible.

9. Installation suivant la revendication 8, **caractérisée en ce que** la machine de coupe a, en amont du couteau, un rouleau de déroulement de bande adhésive et, en aval du couteau, un rouleau d'enroulement de la bande adhésive munie des entailles transversales.

10. installation suivant la revendication 8, **caractérisée en ce que** la machine de coupe est intégrée à un système de revêtement ou à un dispositif de coupe à rouleau, pour une coupe longitudinale en amont du rouleau d'enroulement.

11. Réserve pour des bandes adhésives revêtues suivant la revendication 1 ou l'une des suivantes, **caractérisée en ce que** l'extrémité (15) d'au moins un brin (14) de guidage sous forme de fil ou de bande est fixée sur une bobine (13) et la réserve (26) est formée par déroulement de ce brin (14) de guidage, ensemble avec une pluralité de pièces découpées (18) qui se succèdent des bandes revêtues, de façon à ce que le brin (14) de guidage sous forme de fil ou de bande vienne entre chaque strate de bande de l'enroulement (21) de bande ainsi formé.

12. Réserve suivant la revendication 11, **caractérisée en ce que** les pièces découpées (12) sont enroulées bout à bout (19).

13. Réserve suivant la revendication 11, **caractérisée en ce que** les pièces découpées (18) sont enroulées en se chevauchant (20) les unes avec les autres.

14. Réserve suivant la revendication 11 ou l'une des suivantes, **caractérisée en ce que** la couche de colle des pièces découpées (12) se trouve à leur état enroulé sur leur face dirigée vers l'extérieur.

15. Réserve suivant la revendication 11 ou l'une des suivantes, **caractérisée en ce que** les pièces découpées (18) sont reliées entre elles par des éléments de collage, recouvrant en partie respectivement leurs bords adjacents.

16. Réserve suivant la revendication 11 ou l'une des suivantes, **caractérisée en ce que** des disques (17) de délimitation des deux côtés de l'enroulement (21) de bande, sont guidés sur la bobine (13).

17. Réserve suivant la revendication 11 ou l'une des suivantes, **caractérisée en ce que** la réserve (26) est montée tournante dans un boîtier (22), qui a une ouverture (23) ménagée dans la paroi et destinée au passage des bandes (18) et du brin (14) de guidage.

18. Réserve suivant la revendication 17, **caractérisée en ce que** dans le boîtier (22) ou à côté du boîtier (22), est monté un axe (24) pouvant être entraîné notamment en sens inverse du sens de prélèvement des bandes, et destiné à enrouler le brin (14) de guidage qui a été tiré.

19. Réserve suivant la revendication 17 ou l'une des suivantes, **caractérisée par** son incorporation dans un appareil de reliure par collage.
